# EUROPEAN PATENT SPECIFICATION

(11) **EP 0 820 125 B1**
(45) Date of publication and mention of the grant of the patent: **13.09.2006**
(21) Application number: 97111960.7
(22) Date of filing: 14.07.1997
(51) Int. Cl.: H01R 35/04, H01R 35/02

(54) **Rotary connector**
Drehverbinder
Connecteur tournant

(30) Priority: 15.07.1996 JP 18499696
(43) Date of publication of application: 21.01.1998
(73) Proprietor: ALPS ELECTRIC CO., LTD., Ota-ku Tokyo 145 (JP)
(72) Inventor: Matsumoto, Mitsunori, Furukawa-shi, Miyagi-ken (JP); Bannai, Hiroyuki, Furukawa-shi, Miyagi-ken (JP); Ito, Takehiko, Furukawa-shi, Miyagi-ken (JP)
(74) Representative: Klunker . Schmitt-Nilson . Hirsch

(56) References cited:
- EP-A- 0 695 000
- US-A- 3 763 455

## Description

### BACKGROUND OF THE INVENTION

### 1. Field of the Invention

The present invention relates to a rotary connector. Such connector may be incorporated in an automotive steering unit and used as an electrical connection means for an air bag system or the like. More particularly, it relates to a rotary connector in which flat cables are wound in the reverse direction via reversal sections in a holding space formed between a fixed housing and a movable housing. A connector of the above type is from EP-A-0695000.

### 2. Description of Related Art

A rotary connector has a flat cable which is coiled and placed between a fixed housing and a movable housing which is rotatably mounted with respect to the fixed housing; it is incorporated in an automotive steering unit and employed as an electrical connection means for an air bag inflator or the like attached to a steering wheel which has a finite number of revolutions. The flat cable is shaped like a band and has a plurality of conductors. The rotary connector is known to come in two types; in one type, the flat cable is wound in a coil, and in the other type, the flat cable is reversed in the opposite direction at the middle thereof. In the latter reversal type, the required length of the flat cable can be significantly reduced.

Such a reversal type rotary connector normally uses one flat cable. As the number of conductors is increased with increasing trend toward multiple-circuit designs, the width of the flat cable inevitably increases as it includes more conductors, preventing the entire rotary connector from being made thinner. To solve the problem, the rotary connector disclosed in the specification of USP No. 3,763,455 supports multiple circuits by employing two flat cables to accommodate the conductors.

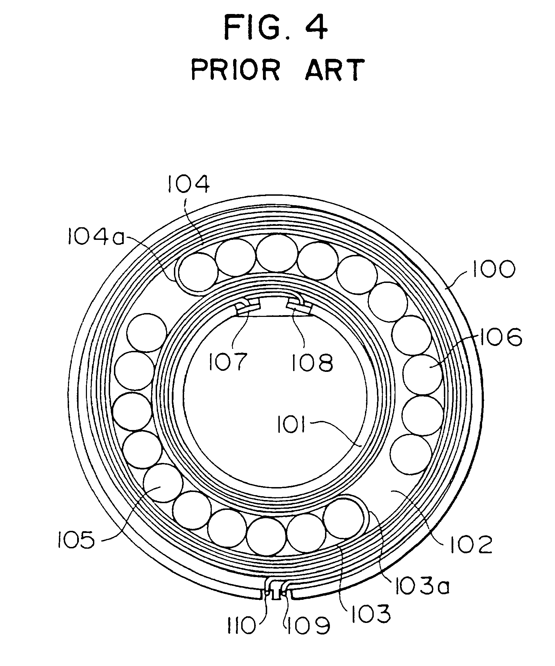

Fig. 4 is a top plan view illustrative of a schematic configuration of a cable reel disclosed in the foregoing patent specification, similar to that of EP-A-0695000. As shown in the drawing, a movable housing 101 which has a cylindrical inner section is rotatably connected with respect to a fixed housing 100 which has a cylindrical outer section; a first flat cable 103 and a second flat cable 104 are housed in an annular holding space 102 formed between the fixed housing 100 and the movable housing 101. These flat cables 103 and 104 are placed in the holding space 102 so that they are wound around the outer cylindrical section of the fixed housing 100 and the inner cylindrical section of the movable housing 101, the winding directions thereof being opposite from each other. At the position where the winding direction is reversed, U-shaped reversal sections 103a and 104a are formed. The inner ends of the two flat cables 103 and 104 are connected to cable outlet sections 107 and 108 disposed adjacently to the inner cylindrical section of the movable housing 101 and led out of the movable housing 101 via the cable outlet sections 107 and 108. The outer ends of the two flat cables 103 and 104 are connected to cable outlet sections 109 and 110 located in the vicinity of the outer cylindrical section of the fixed housing 100 and led out of the fixed housing 100 via the cable outlet sections 109 and 110. Further, disposed in the holding space 102 are a plurality of groups of rollers 105 and 106 in the circumferential direction, a reversal section 103a of the first flat cable 103 being looped by a group of the rollers 105, whereas a reversal section 104a of the second flat cable 104 being looped by a group of the rollers 106.

In the rotary connector thus configured, when, for example, the movable housing 101 is turned clockwise in Fig. 4, the reversal sections 103a and 104a of the flat cables 103 and 104, respectively, move clockwise in the holding space 102 by the amount of turn which is smaller than that of the movable housing 101, causing the flat cables 103 and 104 to be wound up with increased winding on the inner cylindrical section of the movable housing 101. Conversely, when the movable housing 101 is turned counterclockwise in Fig. 4, the reversal sections 103a and 104a of the flat cables 103 and 104, respectively, also move counterclockwise by the amount of turn which is smaller than that of the movable housing 101, causing the flat cables 103 and 104 to be unwound with increased winding on the outer cylindrical section of the fixed housing 100. At the time of such winding up and unwinding, the rollers 105 and 106 also move in the same direction by being subjected to the forces applied by the reversal sections 103a and 104a of the flat cables 103 and 104, respectively.

In the conventional rotary connector described above, the radial deformation of the two flat cables 103 and 104 is restricted by the plurality of groups of the rollers 105 and 106. Hence, the flat cables 103 and 104 can be smoothly moved in the circumferential direction of the holding space 102; however, since the plurality of groups of the rollers 105 and 106 are disposed in the holding space 102 so that they are separated and independent from each other, vibration applied to the rotary connector causes the groups of the rollers 105 and 106 to bump against each other, producing a collision noise. The rotary connector has been posing other problems including poor assemblability.

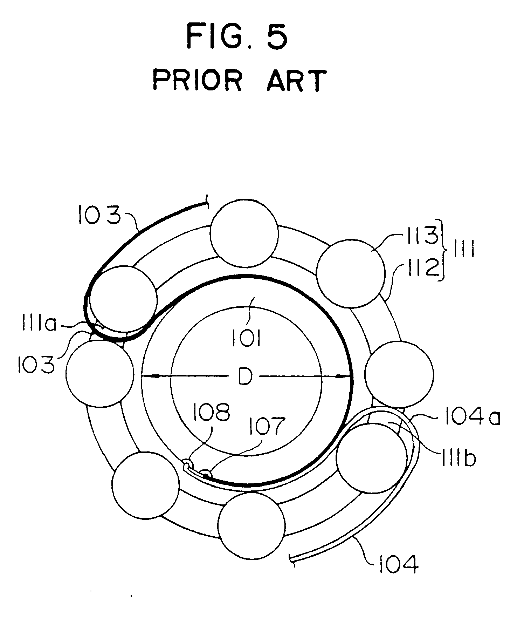

There is a conceivable solution to the problem described above as shown in Fig. 5 wherein, instead of employing the mutually separated and independent groups of the rollers 105 and 106, a moving member 111 which has at least two openings 111a and 111b is disposed in the holding space 102 such that it may circularly move, and the reversal sections 103a and 104a of the flat cables 103 and 104 are passed through the openings 111a and 111b. The moving member 111 is composed of a ring-like rotary plate 112 and a plurality of groups of rollers 113 journaled on the rotary plate 112; the openings 111a and 111b are formed at equal intervals between the groups of the rollers 113. Hence, when the moving member 111 which has such openings 111a and 111b is employed, the rotary plate 112 and the group of the rollers 113 can be handled as one piece and the bumping between the groups of the rollers 113 can be prevented, thus solving the problems with the conventional rotary connector described above; however, it poses a different problem set forth below.

Is the rotary connector, when the diameter of the inner cylindrical section of the movable housing 101 is denoted as D and the thicknesses of the flat cables 103 and 104 are denoted as t, the winding diameter of the first flat cable 103 directly wound on the inner cylindrical section becomes D, whereas the winding diameter of the second flat cable 104 wound on the inner cylindrical section via the first flat cable 103 which corresponds to approximately one turn becomes (D + 2t); therefore, the winding diameters of the two flat cables 103 and 104 do not coincide. Accordingly, when the movable housing 101 is turned, the amount of winding of the flat cable 103 onto the inner cylindrical section becomes different from that of the flat cable 104, or the amounts of unwinding of the two flat cables therefrom become different, causing the reversal section 104a of the second flat cable 104 which has the larger winding diameter to move faster than the reversal section 103a of the first flat cable 103 which has the smaller winding diameter. As a result, as shown, for example, in the drawing, when the flat cables 103 and 104 are unwound from the inner cylindrical section and wound back onto the outer cylindrical section, the reversal section 104a of the second flat cable 104 comes in contact with the roller 113 located at the end of the opening 111b, whereas the reversal section 103a of the first flat cable 103 moving slower merely moves in the opening 111a and does not come in contact with the roller 113, thus presenting a problem in that the moving member 111 cannot be smoothly moved by the forces applied by the two reversal sections 103a and 104a. Document EP-A-0695000 discloses a rotary connector according to the preamble of claim 1.

### SUMMARY OF THE INVENTION

The present invention relates to a rotary connector wherein a moving member disposed in a holding space is provided with a plurality of openings through which the reversal sections of a plurality of flat cables pass, and the width of at least one of the openings in the circumferential direction is set so that it is smaller than others. Thus, instead of setting all the openings of the moving member to the same width, the opening corresponding to the reversal section of the flat cable which has a smaller winding diameter is set smaller than that of the opening corresponding to the reversal section of the flat cable which has a larger diameter so as to enable the moving member to smoothly move in the holding space because the forces of the reversal sections of the flat cables can be respectively applied to the moving member.

According to the present invention, there is provided a rotary connector having the features of claim 1.

The moving member functions to prevent the flat cables from deforming in the radial direction in the holding space. The moving member may be constructed, for example, by a plurality of roller groups journaled on a rotary plate; in this case, an opening is formed between a pair of rollers. Some of the rollers may be replaced by a fixed cylinder and an opening may be formed between the fixed cylinder and the rollers.

If there are an N number of flat cables, then it is necessary to provide the moving member with the N number of openings. Forming the openings at approximately equal intervals in the circumferential direction of the moving member, i.e. locating the openings at approximately 360/N degrees, enables the forces by the reversal sections of the flat cables to be evenly applied to the moving member.

Providing the inner cylindrical section with a joint for bundling one end of each of the flat cables at a single location and leading one end of each of the flat cables out of the second housing through the joint makes it possible to simplify the structure of the connection with an external connector.

### BRIEF DESCRIPTION OF THE DRAWINGS

Fig. 1 is a top plan view of a rotary connector in accordance with an embodiment of the present invention;
Fig. 2 is a sectional view of the rotary connector;
Fig. 3 is a schematic representation illustrative of an essential section of the rotary connector;
Fig. 4 is a top plan view of a rotary connector according to a prior art; and
Fig. 5 a schematic representation of a rotary connector according to another prior art.

### DESCRIPTION OF THE PREFERRED EMBODIMENTS

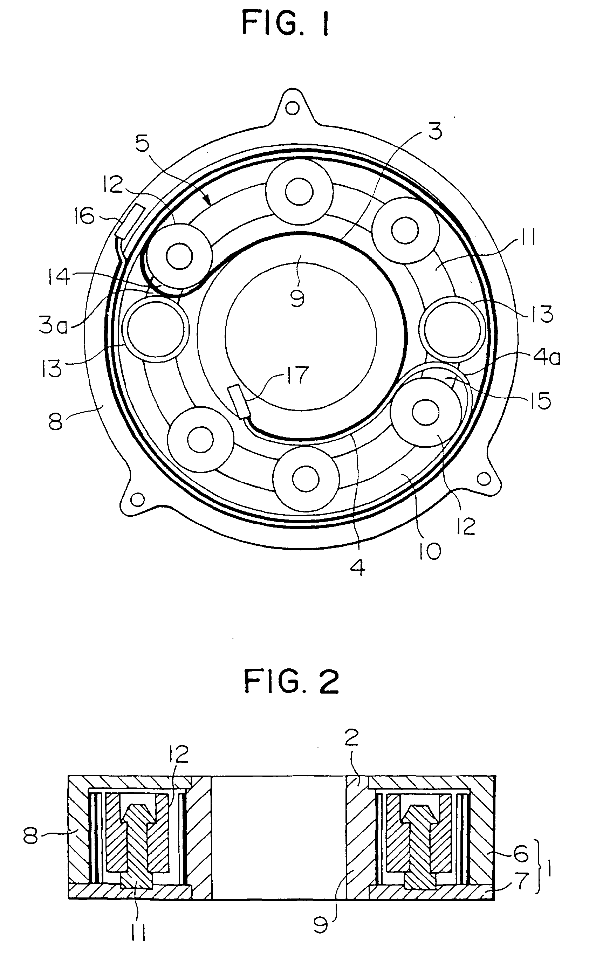

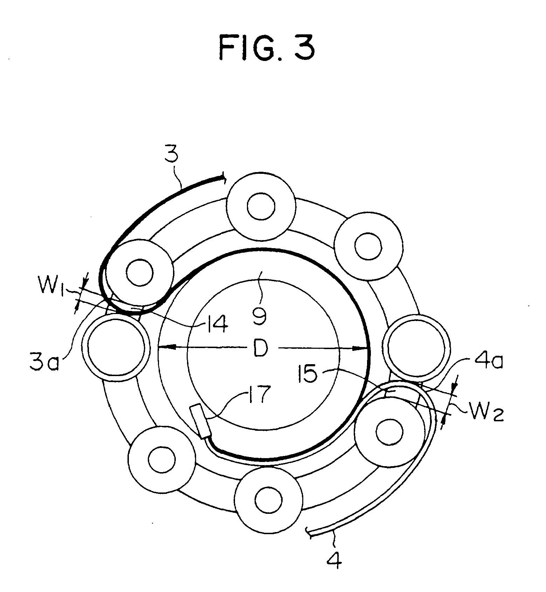

An embodiment of the present invention will be described with reference to the accompanying drawings. Fig. 1 is a top plan view of a rotary connector according to an embodiment of the present invention; Fig. 2 is a sectional view of the rotary connector; and Fig. 3 is a schematic representation illustrative of an essential section of the rotary connector. As shown in these drawings, the rotary connector according to the embodiment is constituted mainly by: a fixed housing 1; a movable housing 2 rotatably connected with respect to the fixed housing 1; first and second flat cables 3 and 4 held between the two housings 1 and 2; and a moving member 5 which is disposed between the two housings 1 and 2 such that it may move circularly.

The fixed housing 1 is constructed by an upper case 6 and a lower case 7 which are combined into one piece; an outer cylindrical section 8 is formed on the lower case 7. The movable housing 2 is provided with an inner cylindrical section 9. The outer cylindrical section 8 and the inner cylindrical section 9 are coaxially arranged, an annular holding space 10 being formed between the two cylindrical sections 8 and 9. Disposed in the holding space 10 is the moving member 5 which is constituted by an annular rotary plate 11 and a plurality of groups of rollers 12 journaled on the rotary plate 11 and a pair of fixed cylinders 13. A first opening 14 is formed between one fixed cylinder 13 and one of the rollers 12, and a second opening 15 is formed between the other fixed cylinder 13 and one of the rollers 12, the openings 14 and 15 being located at about 180 degrees opposite from each other. As illustrated in Fig. 3, when the width of the first opening 14 in the circumferential direction is denoted as W₁ and the width of the second opening 15 in the circumferential direction is denoted as W₂, these widths are set to have a relationship of W₁ < W₂.

The first and second flat cables 3 and 4 are each shaped like a band composed of a plurality of conductors made of copper or the like on one surface of a base film made of an insulating tape of PET or the like. For the purpose of convenience, the first flat cable 3 is drawn in black, whereas the second flat cable 4 is drawn in white. The outer ends of the two flat cables 3 and 4 are connected to a fixed joint 16 secured to the outer cylindrical section 8 and electrically led out of the fixed housing 1 via the fixed joint 16. The inner ends of the two flat cables 3 and 4 are connected to a movable joint 17 fixed to the inner cylindrical section 9 and electrically led out of the movable housing 2 via the joint 17. At this time, both flat cables 3 and 4 are housed in the holding space 10 such that they are wound counterclockwise along the inner wall of the outer cylindrical section 8 from the fixed joint 16 with the first flat cable 3 being on the outer side, then they are separated such that the first flat cable 3 passes through the first opening 14 and reversed in U shape by one of the rollers 12 (hereinafter referred to as a "reversal section 3a"), whereas the second flat cable 4 passes through the second opening 15 and reversed in U shape by another one of the rollers 12 (hereinafter referred to as a "reversal section 4a"); they are then wound clockwise on the peripheral surface of the inner cylindrical section 9 with the second flat cable being on the outer side before they reach the joint 17.

Hence, the inner end of the first flat cable 3 is directly wound around the inner cylindrical section 9, whereas the inner end of the second flat cable 4 is wound around the inner cylindrical section 9 via approximately one turn of the first flat cable 3. More specifically, if the diameter of the inner cylindrical section 9 of the movable housing 2 is denoted as D and the thicknesses of the flat cables 3 and 4 are denoted as t, then the winding diameter of the first flat cable 3 becomes D, while the winding diameter of the second flat cable 4 becomes (D + 2t); therefore, the winding diameter of the second flat cable 4 wound around the inner cylindrical section 9 is larger than that of that of the first flat cable 3 wound around the inner cylindrical section 9. Widths W₁ and W₂ of the first and second openings 14 and 15, respectively, previously described are set with that difference in winding diameter taken into consideration; width W₁ of the first opening 14 through which the reversal section 3a of the first flat cable 3 having the smaller winding diameter passes is set smaller than width W₂ of the second opening 15 through which the reversal section 4a of the second flat cable 4 having the larger winding diameter passes.

The operation of the rotary connector according to the embodiment will now be described. In this embodiment, the fixed housing 1 is secured to a stator member of a steering unit, and an external connector, not shown, on a car body is connected to the fixed joint 16. The movable housing 2 is fixed to a steering wheel which is the rotor member of the steering unit; an external connector, not shown, on the steering wheel is connected to the movable joint 17.

In operation, when the steering wheel is turned clockwise or counterclockwise, the torque is transmitted to the movable housing 2, causing the movable housing 2 to rotate clockwise or counterclockwise. For instance, when the movable housing 2 rotates counterclockwise from the neutral position of the steering wheel, the reversal sections 3a and 4a of the first and second flat cables 3 and 4, respectively, accordingly move counterclockwise by the amount of rotation which is smaller than that of the movable housing 2, and the moving member 5 also moves counterclockwise in response to the movement of the reversal sections 3a and 4a. As a result, the flat cables 3 and 4 are unwound from the inner cylindrical section 9 by a length approximately double the movements and wound back onto the outer cylindrical section 8. In this case, the reversal section 4a of the second flat cable 4 which has a larger winding diameter moves faster than the reversal section 3a of the first flat cable 3 which has a smaller winding diameter; however, since there is the established relationship of W₁ < W₂, the two reversal sections 3a and 4a push the fixed cylinders 13 which are respectively located at one end of each of the openings 14 and 15, enabling the moving member 5 to smoothly move in the holding space 10 by being subjected to the forces applied by the two reversal sections 3a and 4a.

Conversely, when the movable housing 2 rotates clockwise from a state where the steering wheel is in the neutral position, the reversal sections 3a and 4a of the first and second flat cables 3 and 4, respectively, accordingly move clockwise by the amount of rotation which is smaller than that of the movable housing 2, and the moving member 5 also moves clockwise in response to the movement of the reversal sections 3a and 4a. As a result, the flat cables 3 and 4 are unwound from the outer cylindrical section 8 by a length approximately double the movements and tightened by the inner cylindrical section 9. In this case, the reversal section 4a of the second flat cable 4 which has a larger winding diameter moves faster than the reversal section 3a of the first flat cable 3 which has a smaller winding diameter; however, since there is the established relationship of W₁ < W₂, the two reversal sections 3a and 4a pull the rollers 12 which are respectively located at the other ends of the openings 14 and 15, enabling the moving member 5 to smoothly move in the holding space 10 by being subjected to the forces applied by the two reversal sections 3a and 4a.

Thus, in the embodiment described above, widths W₁ and W₂ of the first and second openings 14 and 15 through which the reversal sections 3a and 4a of the flat cables 3 and 4 respectively pass are set to different values according to the difference in the winding diameters of the two flat cables 3 and 4 wound around the inner cylindrical section 9; therefore, when the movable housing 2 rotates, the moving member 5 is rotationally driven primarily by the reversal section 4a of the flat cable 4 having the larger winding diameter, however, the reversal section 3a of the flat cable 3 can be brought in contact with the end of the first opening 14, so that the forces from the reversal sections 3a and 4a of the flat cables 3 and 4, respectively, can be applied to the moving member 5 so as to smoothly move the moving member especially because the first and second openings 14 and 15 are formed at the 180 degrees opposed positions on the moving member 5. In addition, the inner ends of the flat cables 3 and 4 are bundled at the same location by the movable joint 17, thus allowing the structure of the connection with the external connector on the steering wheel to be simplified.

In the above embodiment, the description has been given to the case there two flat cables are employed; however, the present invention can also be applied to a case where three or more flat cables are used. In that case, three or more flat cables are used, the widths of a plurality of openings through which the reversal sections of the flat cables pass are to be properly set according to the differences among the winding diameters of the flat cables wound around the inner cylindrical section.

Thus, the present invention provides the following advantages.

By providing a moving member disposed in a holding space with a plurality of openings through which the reversal sections of a plurality of flat cables pass, and by setting the width of at least one of the openings in the circumferential direction so that it is smaller than others, even if the reversal sections of the flat cables move at different speeds due to the different winding diameters when winding up or unwinding the flat cables, the forces from these reversal sections can be respectively applied to the moving member so as to smoothly move the moving member.

Further, by forming the openings at about equal intervals in the circumferential direction of the moving member, the forces from the reversal sections of the flat cables can be uniformly applied to the moving member.

Furthermore, the structure of the connection to an external connector can be simplified by providing the inner cylindrical section with a joint for bundling one end of each of the flat cables at the same location and by leading the ends of the flat cables out of the second housing.

## Claims

1. A rotary connector comprising:
a first housing (1) which has an outer cylindrical section(8); a second housing (2) which is rotatably attached to said first housing (1) and which has an inner cylindrical section (9) opposed to said outer cylindrical section (8) via an annular holding space (10); a plurality of flat cables which are wound in said holding space (10) such that the winding directions thereof are reversed in the middle and both ends thereof are respectively fixed to said outer cylindrical section (8) and said inner cylindrical section (9); and a moving member (5) which is disposed in said holding space so that it may circularly move and which has a plurality of openings (14, 15) through which the reversal sections (3a, 4a) of said flat cables pass (3,4) ; charaterized in that
the width (W1) of at least one of said openings (14,15) in the circumferential direction is set so that it is smaller than those (W2) of others.

2. A rotary connector according to Claim 1, wherein said openings (14,15) are provided at approximately equal intervals in the circumferential direction of said moving member(5).

3. A rotary connector according to Claim 1 or 2, wherein said inner cylindrical section (9) is provided with a joint (17) for bundling one end of each of said flat cables (3,4) at a single location.

4. A rotary connector according to Claim 1 or 2, wherein said outer cylindrical section (8) is provided with a joint (16) for bundling one end of each of said flat cables (3,4) at a single location.

5. A rotary connector according to any of Claims 1 to 4, wherein at least one of said plurality of openings has a roller (12) on which said flat cable (3,4) is reversed and a fixed cylinder (13) opposed to said roller (12) via said flat cable 3,4.

6. A rotary connector according to any of claims 1 to 5, wherein
two flat cables(3,4) which are wound in said holding space (10) such that the winding directions thereof are reversed in the middle and both ends thereof are respectively fixed to said outer cylindrical sections (8) and said inner cylindrical section (9); said moving member (5) having two openings through which the reversal sections (3a,4a) of said flat cables (3,4) pass; and wherein
the width (W1) of one of said two openings in the circumferential direction is set so that it is smaller than (W2) that of the other (15).

7. A rotary connector according to Claim 6, wherein said two openings are provided at positions 180 degrees opposed to each other in said moving member (5).

8. A rotary connector according to Claim 6 or 7, wherein said inner cylindrical section is provided with a joint for bundling one end of each of said flat cables at a single location.

9. A rotary connector according to any of claims 6 to 8 wherein at outer cylindrical section is provided with a joint for bundling one end of each of said flat cables at a single location.

## Patentansprüche

1. Drehverbinder, umfassend:
ein erstes Gehäuse (1) mit einem äußeren zylindrischen Abschnitt (8); ein zweites Gehäuse (2), welches drehbar an dem ersten Gehäuse (1) angebracht ist und einen inneren zylindrischen Abschnitt (9) gegenüber dem äußeren zylindrischen Abschnitt (8) über einen ringförmigen Halteraum (10) aufweist; eine Mehrzahl von Flachkabeln (3, 4), die in dem Halteraum (10) derart aufgewickelt sind, dass ihre Wickelrichtungen in der Mitte umgekehrt sind und ihre beiden Enden an dem äußeren zylindrischen Abschnitt (8) bzw. dem inneren zylindrischen Abschnitt (9) fixiert sind; und ein Bewegungselement (5), welches in dem Halteraum derart untergebracht ist, dass es sich kreisförmig bewegen kann, und das eine Mehrzahl von Öffnungen (14, 15) besitzt, durch die die Umkehrabschnitte (3a, 4a) der Flachkabel (3, 4) hindurchgehen, **dadurch gekennzeichnet, dass** die Breite (W1) mindestens eine der Öffnungen (14, 15) in Umfangsrichtung derart eingestellt ist, dass sie kleiner ist als die (W2) von Anderen.

2. Drehverbinder nach Anspruch 1, bei dem die Öffnungen (14, 15) mit annähernd gleichen Abständen in Umfangsrichtung des Bewegungselements (5) vorgesehen sind.

3. Drehverbinder nach Anspruch 1 oder 2, bei dem der innere zylindrische Abschnitt (9) mit einer Verbindung (17) zum Bündeln eines Endes jedes der Flachkabel (3, 4) an einer einzelnen Stelle ausgestattet ist.

4. Drehverbinder nach Anspruch 1 oder 2, bei dem der äußere zylindrische Abschnitt (8) mit einer Verbindung (16) zum Bündeln eines Endes jedes der Flachkabel (3, 4) an einer einzelnen Stelle ausgestattet ist.

5. Drehverbinder nach einem der Ansprüche 1 bis 4, bei dem zumindest eine der mehreren Öffnungen eine Rolle (12) aufweist, auf der das Flachkabel (3, 4) umgekehrt wird, und einen fixierten Zylinder (13) aufweist, der der Rolle (12) über das Flachkabel (3, 4) gegenüberliegt.

6. Drehverbinder nach einem der Ansprüche 1 bis 5, bei dem zwei Flachkabel (3, 4), die in dem Halteraum (10) derart aufgewickelt sind, dass ihre Wickelrichtungen in der Mitte umgekehrt sind, und ihre beiden Enden an dem äußeren zylindrischen Abschnitt (8) bzw. den inneren zylindrischen Abschnitt (9) fixiert sind, vorgesehen sind, wobei das Bewegungselement (5) zwei Öffnungen besitzt, durch die die Umkehrabschnitte (3a, 4a) der Flachkabel (3, 4) hindurchgehen; und wobei die Breite (W1) der einen (14) der beiden Öffnungen in Umfangsrichtung derart eingestellt ist, dass sie kleiner ist als diejenige (W2) der Anderen (15).

7. Drehverbinder nach Anspruch 6, bei dem die beiden Öffnungen an Stellen angeordnet sind, die in dem Bewegungselement (5) um 180 Grad gegeneinander versetzt sind.

8. Drehverbinder nach Anspruch 6 oder 7, bei dem der innere zylindrische Abschnitt mit einer Verbindung zum Bündeln eines Endes jedes der Flachkabel an einer einzigen Stelle ausgestattet ist.

9. Drehverbinder nach einem der Ansprüche 6 bis 8, bei dem der äußere zylindrische Abschnitt mit einer Verbindung zum Bündeln eines Endes jedes der Flachkabel an einer einzigen Stelle versehen ist.

## Revendications

1. Connecteur rotatif comprenant :
un premier boîtier (1) qui a une section cylindrique externe (8) ; un second boîtier (2) qui est fixé de manière rotative sur ledit premier boîtier (1) et qui a une section cylindrique interne (9) opposée à ladite section cylindrique externe (8) via un espace de support annulaire (10) ; une pluralité de câbles plats (3, 4) qui sont enroulés dans ledit espace de support (10), de sorte que leurs directions d'enroulement sont inversées au centre et leurs deux extrémités sont respectivement fixées sur ladite section cylindrique externe (8) et ladite section cylindrique interne (9) ; et un élément mobile (5) qui est disposé dans ledit espace de support, de sorte qu'il peut se déplacer de manière circulaire, et qui a une pluralité d'ouvertures (14, 15) à travers lesquelles les sections d'inversion (3a, 4a) desdits câbles plats (3, 4) passent ; **caractérisé en ce que** :
la largeur (W1) d'au moins l'une desdites ouvertures (14, 15) dans la direction circonférentielle est déterminée, de sorte qu'elle est inférieure à celles (W2) des autres.

2. Connecteur rotatif selon la revendication 1, dans lequel lesdites ouvertures (14, 15) sont prévues à des intervalles approximativement égaux dans la direction circonférentielle dudit élément mobile (5).

3. Connecteur rotatif selon la revendication 1 ou 2, dans lequel ladite section cylindrique interne (9) est prévue avec un assemblage (17) pour grouper une extrémité de chacun desdits câbles plats (3, 4) à un emplacement unique.

4. Connecteur rotatif selon la revendication 1 ou 2, dans lequel ladite section cylindrique externe (8) est prévue avec un assemblage (16) pour grouper une extrémité de chacun desdits câbles plats (3, 4) à un emplacement unique.

5. Connecteur rotatif selon l'une quelconque des revendications 1 à 4, dans lequel au moins l'une parmi ladite pluralité d'ouvertures a un rouleau (12) sur lequel ledit câble plat (3, 4) est inversé et un cylindre fixe (13) opposé audit rouleau (12) via ledit câble plat (3, 4).

6. Connecteur rotatif selon l'une quelconque des revendications 1 à 5, dans lequel deux câbles plats (3, 4) sont enroulés dans ledit espace de support (10), de sorte que leurs directions d'enroulement sont inversées au centre et leurs deux extrémités sont respectivement fixées sur ladite section cylindrique externe (8) et sur ladite section cylindrique interne (9) ; ledit élément mobile (5) ayant deux ouvertures à travers lesquelles les sections d'inversion (3a, 4a) desdits câbles plats (3, 4) passent ; et dans lequel la largeur (W1) de l'une (14) desdites ouvertures dans la direction circonférentielle est déterminée pour être plus petite que celle (W2) de l'autre (15).

7. Connecteur rotatif selon la revendication 6, dans lequel les deux ouvertures sont prévues à des positions opposées à 180 degrés les unes aux autres dans ledit élément mobile (5).

8. Connecteur rotatif selon la revendication 6 ou 7, dans lequel ladite section cylindrique interne est prévue avec un assemblage pour grouper une extrémité de chacun desdits câbles plats à un emplacement unique.

9. Connecteur rotatif selon l'une quelconque des revendications 6 à 8, dans lequel ladite section cylindrique externe est prévue avec un assemblage pour grouper une extrémité de chacun desdits câbles plats à un emplacement unique.
